# FASCICULE DE BREVET EUROPEEN

(11) **EP 0 520 875 B1**
(45) Date de publication et mention de la délivrance du brevet: **15.03.1995**
(21) Numéro de dépôt: 92401755.1
(22) Date de dépôt: 23.06.1992
(51) Int. Cl.: F16F 3/00, B60K 5/12

(54) **Dispositif élastique composite pour suspension d'installation vibrante**
Elastische Vorrichtung aus Verbundwerkstoff zur Aufhängung einer schwingenden Anlage
Elastic composite device for the suspension of vibrating equipment

(30) Priorité: 27.06.1991 FR 9107972
(43) Date de publication de la demande: 30.12.1992
(73) Titulaire: HUTCHINSON S.A., F-75008 Paris (FR)
(72) Inventeur: Noe, Frédéric, F-45100 Orleans (FR)
(74) Mandataire: Picard, Jean-Claude Georges

(56) Documents cités:
- EP-A- 0 223 617
- EP-A- 0 324 693
- EP-A- 0 351 738
- DE-B- 1 260 884
- FR-A- 2 451 511

## Description

La présente invention concerne un dispositif élastique composite pour suspension d'installation vibrante, pourvu de moyens de fixation, d'une part à une installation vibrante telle qu'un moteur à combustion interne, d'autre part à un support fixe tel qu'un châssis de véhicule, comportant un ressort composite principal courbé à faible raideur radiale, reliant l'un à l'autre lesdits moyens de fixation en délimitant entre eux un espace de forme générale tubulaire. Un tel dispositif est déjà connu par le document EP-A-0 324 693 au nom de la demanderesse.

Le but de l'invention est notamment d'obtenir commodément des butées en compression et en traction, ainsi qu'une limitation des déplacements radiaux relatifs entre lesdits moyens de fixation, au moins selon une direction transversale.

A cet effet, un dispositif de suspension du type général défini au début est caractérisé en ce que ledit ressort composite secondaire est constitué d'une portion de tube échancrée dont les bords longitudinaux opposés - s'étendant selon des génératrices - sont ancrés tous deux dans l'un desdits moyens de fixation.

Un tel dispositif peut encore se caractériser en ce que sur celui desdits moyens dans lequel est ancré ledit second ressort composite est adhérisée une butée de compression en matériau élastique.

Lorsque ladite couche de matériau élastique est adhérisée sur la surface extérieure dudit second ressort, on peut prévoir que cette couche comporte deux surépaisseurs constituant des butées propres à coopérer avec des surfaces d'appui du moyen de fixation concerné dudit ressort composite principal.

Avantageusement aussi, lesdits moyens de fixation peuvent être constitués chacun d'un plot comportant deux flasques entre lesquels est adhérisé du matériau élastique servant d'ancrage aux extrémités correspondantes desdits ressorts, auquel cas ledit matériau élastique servant d'ancrage peut constituer les extrémités de ladite couche.

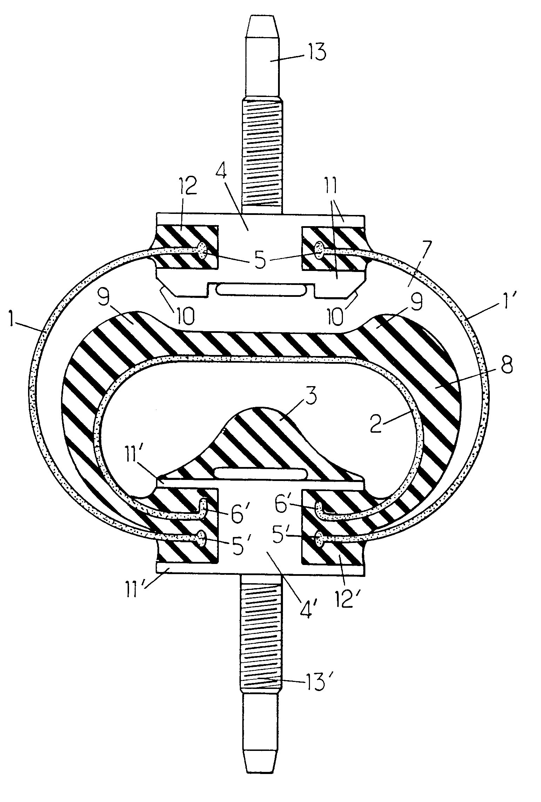

Sur la figure unique du dessin annexé, qui montre à titre d'exemple un mode de réalisation, en coupe transversale, les références 1 et 1' désignent les sections semicylindriques constituant ensemble le ressort composite principal à faible raideur radiale. Ce ressort, ainsi que le ressort secondaire et tubulaire 2, situé à l'intérieur du précédent, peuvent être en toute résine synthétique polymérisée appropriée, armée de fibres de verre ou analogues. Les extrémités 5, 5' du ressort principal 1, 1' et les extrémités 6' du ressort secondaire 2 sont ancrées respectivement dans des blocs de matériau élastique (élastomère) 12, 12' adhérisés entre les flasques 11 d'un plot de fixation 4 (équipé d'une vis 13) et les flasques 11' d'un plot de fixation 4' (équipé d'une vis 13').

Au plot 4' est adhérisé un bloc de matériau élastique 3 constituant une butée de compression. En effet, lorsque les efforts verticaux s'exerçant sur l'installation vibrante tendent à rapprocher excessivement les moyens de fixation 4, 4', la surface interne supérieure du second ressort 2 vient écraser la butée 3.

Les déplacements verticaux d'écartement sont limités quant à eux par une couche de matériau élastique 8 occupant une partie de l'espace 7 ménagé entre les deux ressorts, et adhérisée extérieurement sur le second ressort 2, en prolongation de la butée 3 et de l'ancrage 12'. En effet, lorsqu'un effort de traction important s'exerce sur la vis 13, la paroi interne du ressort 1, 1' vient progressivement en appui sur la surface externe de la couche 8, des deux côtés de celle-ci, ce qui limite les déplacements verticaux d'écartement entre les vis 13 et 13', et également leurs déplacements radiaux relatifs.

En compression, les déplacements radiaux sont limités quant à eux par la coopération de surfaces d'appui inclinées 10 du plot 4 avec des surépaisseurs 9 de la couche 8.

## Revendications

1. Dispositif élastique composite pour suspension d'installation vibrante, pourvu de moyens de fixation, d'une part à une installation vibrante telle qu'un moteur à combustion interne, d'autre part à un support fixe tel qu'un châssis de véhicule, du type comportant un ressort composite principal courbé (1, 1') à faible raideur radiale, reliant l'un à l'autre lesdits moyens de fixation (4, 4') en délimitant entre eux un espace de forme générale tubulaire, caractérisé en ce que ledit dispositif comporte en outre un ressort composite secondaire tubulaire (2) disposé à l'intérieur dudit espace en étant fixé à l'un (4') desdits moyens de fixation, ce ressort secondaire (2) servant de butée de compression et de traction pour ledit ressort principal (1, 1'), ainsi qu'à limiter les déplacements radiaux de ce dernier, dus aux mouvements relatifs desdits moyens (4, 4'), et en ce que ledit ressort composite secondaire (2) est constitué d'une portion de tube échancrée dont les bords longitudinaux (6') opposés - s étendant selon des génératrices - sont ancrés tous deux dans l'un (4') desdits moyens de fixation.

2. Dispositif selon la revendication 1, caractérisé en ce que sur celui (4') desdits moyens dans lequel est ancré ledit second ressort composite (2) est adhérisée une butée de compression (3) en matériau élastique.

3. Dispositif selon la revendication 1 ou 2, dans lequel ladite couche (8) de matériau élastique est adhérisée sur la surface extérieure dudit second ressort (2), caractérisé en ce que cette couche (8) comporte deux surépaisseurs (9) constituant des butées propres à coopérer avec des surfaces d'appui (10) du moyen de fixation (4) concerné dudit ressort composite principal (1, 1').

4. Dispositif selon l'une quelconque des revendications précédentes, caractérisé en ce que lesdits moyens (4, 4') de fixation sont constitués chacun d'un plot comportant deux flasques (11, 11') entre lesquels est adhérisé du matériau élastique servant d'ancrage (12, 12') aux extrémités correspondantes desdits ressorts (1, 1'-2).

5. Dispositif selon les revendications 3 et 4, caractérisé en ce que ledit matériau élastique servant d'ancrage (12, 12') constitue les extrémités de ladite couche (8).

## Claims

1. Composite elastic device for the suspension of vibrating equipment, provided with means of fixing on the one hand to vibrating equipment such as an internal combustion engine and on the other hand to a fixed support such as a vehicle chassis, of the type having a curved principal composite spring (1, 1') with a low radial stiffness, connecting the said fixing means (4, 4') to each other whilst defining between them a space with a tubular shape overall, characterised in that the said device also has a tubular secondary composite spring (2) disposed inside the said space whilst being fixed to one (4') of the said fixing means, this secondary spring (2) serving as a compression and traction stop for the said principal spring (1, 1') and to limit the radial movements of the latter due to the relative movements of the said means (4, 4'), and in that the said secondary composite spring (2) consists of a scalloped tube portion, the opposite longitudinal edges (6') of which - lying along generator lines - are both anchored in one (4') of the said fixing means.

2. Device according to Claim 1, characterised in that a compression stop (3) made from elastic material is bonded to the one (4') of the said means in which the said second composite spring (2) is anchored.

3. Device according to Claim 1 or 2, in which the said layer (8) of elastic material is bonded to the external surface of the said second spring (2), characterized in that this layer (8) has two thicker parts (9) constituting stops suitable for cooperating with bearing surfaces (10) on the relevant fixing means (4) of the said principal composite spring (1,1').

4. Device according to any one of the preceding claims, characterised in that the said fixing means (4, 4') each consist of a block having two flanges (11, 11') between which is bonded elastic material serving as an anchorage (12, 12') for the corresponding ends of the said springs (1, 1' - 2).

5. Device according to Claims 3 and 4, characterised in that the said elastic material serving as an anchorage (12, 12') constitutes the ends of the said layer (8).

## Patentansprüche

1. Elastische Vorrichtung aus Verbundwerkstoff zur Aufhängung einer schwingenden Anlage, wobei die Vorrichtung mit Befestigungsmitteln versehen ist, und zwar einerseits an einer schwingenden Anlage, wie beispielsweise einem Verbrennungsmotor, und andererseits an einem festen Träger, wie beispielsweise einer Fahrzeugkarosserie, und wobei die Vorrichtung eine gebogene Hauptfeder (1, 1') aus Verbundwerkstoff geringer radialer Steifigkeit enthält, die die genannten Befestigungsmittel (4, 4') miteinander verbindet, wobei sie zwischen diesen einen im wesentlichen rohrförmigen Raum begrenzt, dadurch gekennzeichnet,
daß die Vorrichtung weiterhin eine rohrförmige Sekundärfeder (2) aus Verbundwerkstoff enthält, die im Inneren des genannten Raumes angeordnet ist, indem sie an einem (4') der genannten Befestigungsmittel befestigt ist, wobei die Sekundärfeder (2) als Druck- sowie als Zuganschlag für die Hauptfeder (1, 1') sowie der Begrenzung der radialen Auslenkungen der Hauptfeder dient, die auf die Relativbewegungen der genannten Mittel (4, 4') zurückzuführen sind,
und daß die Sekundärfeder (2) aus Verbundwerkstoff aus einem ausgeschnittenen Rohrstück besteht, dessen einander abgewandte Längskanten (6'), die sich längs der Mantellinie erstrecken, in einem (4') der genannten Befestigungsmittel befestigt sind.

2. Vorrichtung nach Anspruch 1, dadurch gekennzeichnet, daß auf demjenigen (4') der genannten Mittel, in dem die Sekundärfeder (2) aus Verbundwerkstoff befestigt ist, ein Druckanschlag (3) aus elastischem Material haftet.

3. Vorrichtung nach den Ansprüchen 1 oder 2, wobei die genannten Schicht (8) aus elastischem Material auf der Außenfläche der Sekundärfeder haftet, dadurch gekennzeichnet, daß diese Schicht (8) zwei Überdicken (9) enthält, die die Anschläge bilden, die mit den Stützflächen (10) des Befestigungsmittels (4) zusammenwirken können, das die Hauptfeder (1, 1') aus Verbundwerkstoff betrifft.

4. Vorrichtung nach einem der vorangegangenen Ansprüche, dadurch gekennzeichnet, daß die Befestigungsmittel (4, 4') jeweils aus einer Klemme mit zwei Flanschen (11, 11') bestehen, zwischen denen elastisches Material haftet, das als Verankerung (12, 12') der entsprechenden Enden der Federn (1, 1'-2) dient.

5. Vorrichtung nach den Ansprüchen 3 und 4, dadurch gekennzeichnet, daß das elastische Material, das als Verankerung (12, 12') dient, die Enden der Schicht (8) bildet.
